Europäisches Patentamt

European Patent Office

Office européen des brevets

(19)

(11) Publication number: **0 353 965**
A2

# (12) EUROPEAN PATENT APPLICATION

(21) Application number: 89307730.5

(22) Date of filing: 28.07.89

(51) Int. Cl.⁴: **F16K 31/06**

(30) Priority: 03.08.88 GB 8818473

(43) Date of publication of application:
07.02.90 Bulletin 90/06

(84) Designated Contracting States:
DE FR GB IT NL

(71) Applicant: NORGREN MARTONAIR GMBH
Postfach 1120
D-4234 Alpen(DE)

(72) Inventor: Hübl, Werner Franz
Rehwinkel 1
D-4232 Xanten(DE)

(74) Representative: Smith, Rex Clise et al
IMI plc, PO Box 216
Witton Birmingham B6 7BA(GB)

(54) Overpowered solenoid operated pneumatic valve.

(57) A solenoid operated pneumatic valve in which the valve is held closed by a spring, the force of the spring being greater than the solenoid of the valve is capable of moving when powered at its continuous electric rating level and which is overpowered to cause the valve to open and the power level is subsequently cut to a hold value so that the valve uses less electricity and small electrical circuits can control relatively large air flows.

EP 0 353 965 A2

# Valve and System Therefor

This invention relates to solenoid operated pneumatic valves and has particular reference to such valves which reduce the amount of energy used in their operation.

It is well known to provide a solenoid operated pneumatic valve in which the flow of a compressed gas - normally air - is controlled by a closure member or spool which is actuated by an electromagnet or solenoid. When the valve is in the closed position, closing off the compressed gas, the closure member or spool is acted on by a force which is directly proportional to the pressure of the gas times the cross-sectional area of the spool or closure member exposed to the pressurised gas. This force is a minimum which must be counteracted in some way by the valve. The force is normally counteracted by a spring so that in the off position the valve is held closed by the spring. To switch the valve on, it is necessary to apply an electrical voltage to the solenoid to cause the spool to move against the bias of the spring. To hold the valve open, it is necessary to keep the voltage applied and this results in electric consumption and the generation of heat.

In electric equipment, it is well known that solenoids and other electric products can have a so-called continuous electrical rating. The continuous electrical rating is one which permits the product to be operated continuously with electrical supply connected to it under the normal conditions of operation. In some cases, products are not continuously electrically rated, for example windscreen washer motors are not continuously rated, it being appreciated that such motors are only operated intermittently. They may be rated at, for example, 5 minutes operation per hour. It is not sufficient however, for solenoid operated pneumatic valves to be intermittently rated in their normal operation and the continuous electrical rating of any valve can readily be determined.

By the present invention there is provided a solenoid operated pneumatic valve to control the flow of compressed gas, the valve having a closure member movable between a closed position and an open position, the closure member being movable from one of the closed or open positions against the force of a resilient bias to the other position by an electric solenoid, characterised in that the closure member being holdable in the energised position by an applied electrical power $P_H$, the value of $P_H$ being less than that which is capable of moving said closure member against the force of the resilient bias from said one position to the other and being equal to or less than the continuous electrical rating of said solenoid, and the level of applied electrical power needed to cause movement of said closure member from said one position to the other against the force of the resilient bias being $P_M$, where $P_M$ is greater than the maximum continuous electrical rating of said solenoid.

The closure member may be movable between a de-energised position in which it is partially within the solenoid, to an energised position in which it is nearer the centre of the solenoid.

The resilient bias may preferably hold the closure member of the valve in its normally closed position. The resilient bias may be applied by a spring and the spring may be a conical spring having a substantially constant rate. The solenoid operated pneumatic valve may be provided with three ports, the first port adapted to be connected to a source of compressed gas, the second port adapted to be connected to the source of compressed gas when the closure member is in the open position and a third or exhaust port adapted to be connected to the second port when the closure member is in the closed position and adapted to be closed by the closure member when the closure member is in the open position. The first port and the exhaust port may be located at opposite ends of the closure member.

Preferably, the solenoid operated pneumatic valve is part of a system including a source of electrical power and means to regulate the electric power such that when it is desired to move the closure member from one position to the other position against the force of the resilient bias, an electrical power of $P_M$ is applied by regulating means in the system and after the valve has reached the other position the regulating means reduces the level of electric power applied to $P_H$.

Both $P_M$ and $P_H$ are applied at substantially constant voltage, the power levels being substantially determined by alteration in the current flow. Preferably, the regulating means comprises an electronic circuit having a power storage means to store electrical energy to permit an output of $P_M$ without the need for power amplifiers. The power storage means may be a capacitance or inductance circuit or a combination thereof.

The present invention also provides a solenoid operated pneumatic valve to control the flow of a compressed gas up to maximum pressure $P_{TOP}$ and having a closure member movable between a closed position and an open position, in the closed position the closure member closing an orifice of area A, such that a maximum force $P_{TOP}.A$ can act on the closure member, the closure member being resiliently biased into one of the closed or open positions by a resilient bias and being movable to the other of the closed or open positions by a solenoid acting against the resilient bias, the force exertable by the resilient bias being slightly greater than $P_{TOP}.A$ and the solenoid having a continuous rating such that at its continuous rating the maximum force exertable by the solenoid is less than $P_{TOP}.A$, the solenoid being capable of being intermittently overpowered to exert a force sufficient to move the closure member against the resilient bias without being damaged.

The present invention also provides a system in which there is provided an electronic circuit controlling two or more solenoids.

There may be provided two solenoid operated pneumatic valves and associated control circuitry to emulate a five port spool valve, each of the valves being connectable to a source of pressurised gas, a pneumatic apparatus to be controlled and an exhaust, such that the pneumatic apparatus to be controlled may be connected alternately to the source of pressurised gas and the exhaust. The two solenoid operated pneumatic valves and associated control circuitry may be incorporated into a single container. The two valves may be both normally closed so that the component to be connected to the circuitry is normally connected at each end to exhaust, or the valves may be normally open, or one valve may be normally closed and one valve may be normally open.

By way of example embodiments of the present invention will now be described with reference to the accompanying drawings of which

FIGURE 1 is a cross-section of a valve in accordance with the present invention

FIGURE 2 is a graph of force against gap

FIGURE 3 is a graph of power against time,

FIGURE 4 is a schematic diagram of a circuit and valve arrangement,

FIGURE 5 is a schematic view of a conventional five port spool valve, and

FIGURE 6 is a schematic view of a two solenoid assembly in accordance with the invention.

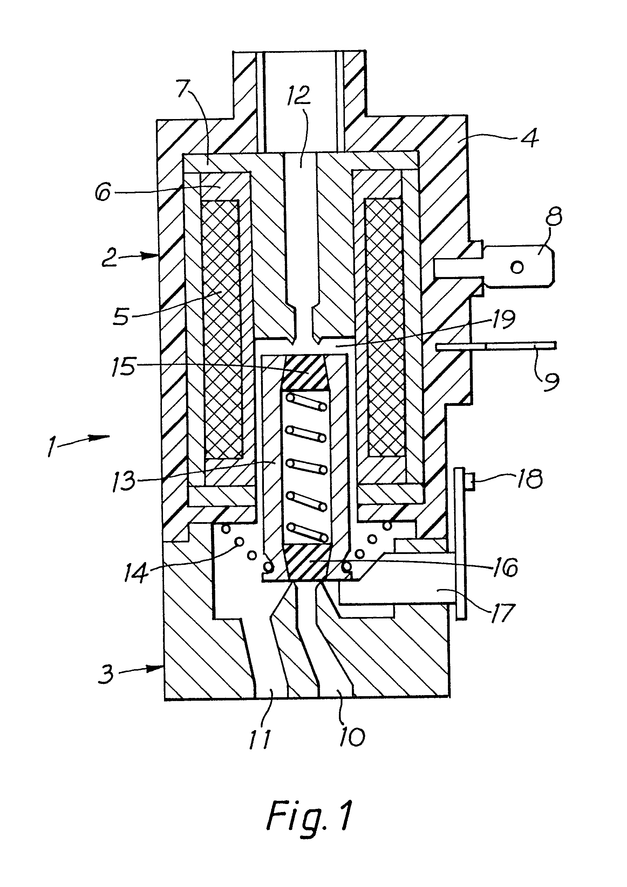

Referring to Figure 1, this shows a solenoid operated pneumatic valve generally indicated by 1 which has an electrical portion 2 and a pneumatic portion 3. The two portions are joined together by screws or bonding in a conventional manner. The electrical portion 2 is in the form of an insulating plastics body 4 containing an electrical solenoid 5 wound on a former 6 and surrounding a soft iron core 7. Terminals 8, 9 are provided to permit the solenoid to be earthed (via terminal 8) and supplied with power via terminal 9 and a second terminal (not shown).

The pneumatic portion 3 of the valve includes a first entry port 10, leading into the valve and an exit port 11. A bore 12 through the soft iron core 7 provides an exhaust port. A closure member or spool 13 is reciprocal within the body of the valve between a closed position as shown in Figure 1 and an open position when the closure member 13 is moved vertically upwards. A conical spring 14 holds the closure member in the closed position so that the port 10 is closed and the exit port 11 is connected to the exhaust port 12. The closure member 13 is formed of soft iron and has a pair of seats 15, 16 which sit on the outlet port 12 and the inlet port 10 respectively.

The valve may be opened manually by means of a rotary member 17 which can be rotated by handle 18 to lift the closure member 13 from its seat by a camming action.

The solenoid coil 5 is capable of generating an electrical field in the soft metal core 7 which results in the closure member 13 being attracted to the core 7 and closing the gap 19. When gap 19 is closed, the valve will be in the open position and compressed gas, typically air, can pass through inlet port 10 and out through outlet port 11. When the valve is in the open position, the inlet port 10 is closed and the outlet port 11 is connected to exhaust port 12.

The solenoid valve 5 has a continuous electrical rating which can readily be determined by experiment. The continuous rating is such that the electrical power applied to the solenoid may be connected indefinately without causing overheating or damage to the solenoid or the valve generally. The rating of the spring 14 is such that it will not be moved by the force generated by solenoid 5 when the continuously rated power is applied to the solenoid. If, however, an overload is applied to the solenoid in the sense that the current passed through the solenoid is greater than the continuously rated current then the solenoid will generate sufficient field to cause the closure member 13 to be moved against the resilient bias of spring 14. This will cause the valve to open.

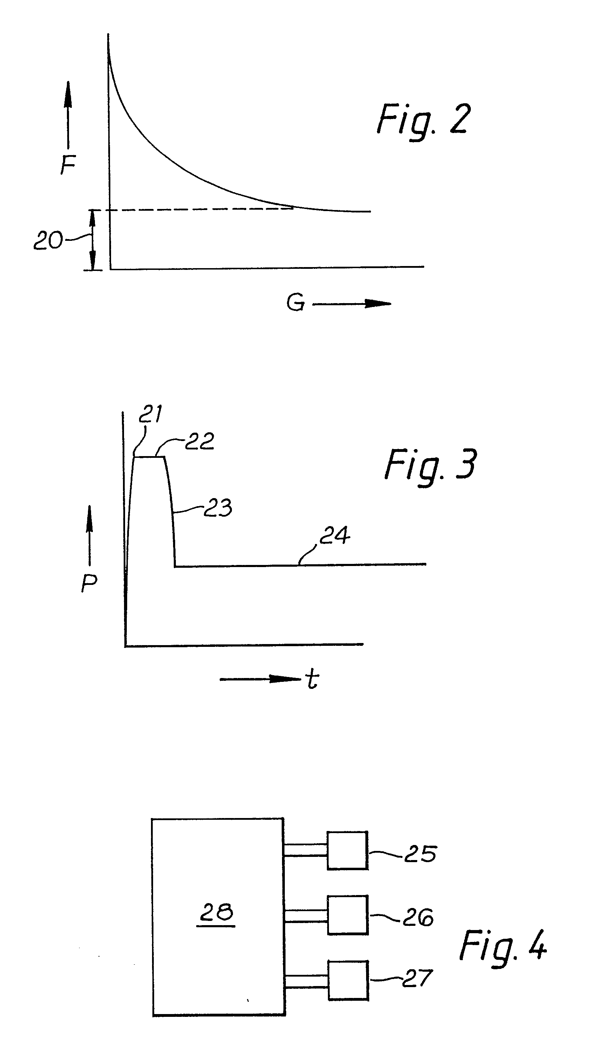

Referring to Figure 2, it can be seen that this is a graph of force F acting on the closure member 13 against gap G which corresponds to the width of the gap 19. The force F on the closure member 13 increases very rapidly as the gap falls and the force is a maximum when the gap is effectively 0. Since the force required to move the solenoid is greatest when the gap is at its largest it can be seen that the amount of force required to hold the solenoid against the force of the spring 14 is substantially equal to the level indicated at 20 as the rating of the spring 14 is substantially constant. It can be seen therefore that whatever power rating is used to cause the spring to move, is in excess of that needed to hold the closure member 13 in the open position.

Figure 3 illustrates the power applied by the regulating circuitry which powers the valve. The applied power P is shown rising to a peak 21 and being kept there for a few milliseconds 22 whilst the valve closure member is in motion. Once the valve has closed, the applied power P drops as at 23 to a holding level 24. 22 therefore corresponds to $P_M$, being above the continuous electrical rating of the solenoid and 24 corresponds to $P_H$, being at or below the continuous electrical rating. The applied voltage 24 is however insufficient to cause the closure member 13 to move from the fully closed to the open position.

As shown in Figure 4, a series of electric pneumatic interface valves 25, 26, 27 may be controlled by a single electronic circuitry 28. The electronic circuitry may be a conventional printed circuit board with a microprocessor and amplifier, but without full power amplifiers or relays. The power required to hold the valves of the invention open, when the cross-sectional area of the closure member exposed to pressures of 10 bar or less is 2 mm² or less can be dealt with by a conventional electronic circuit. The. total power required to hold the valve open is typically 1 W for a valve of the invention and having the ability to handle a cross-sectional area of 2 mm² and an applied pressure of 7 bar. If required, the electronic circuitry can be provided with a capacitor or series of capacitors or one or more inductance members which can store electrical energy and be triggered to cause the valves to open by temporarily overloading them.

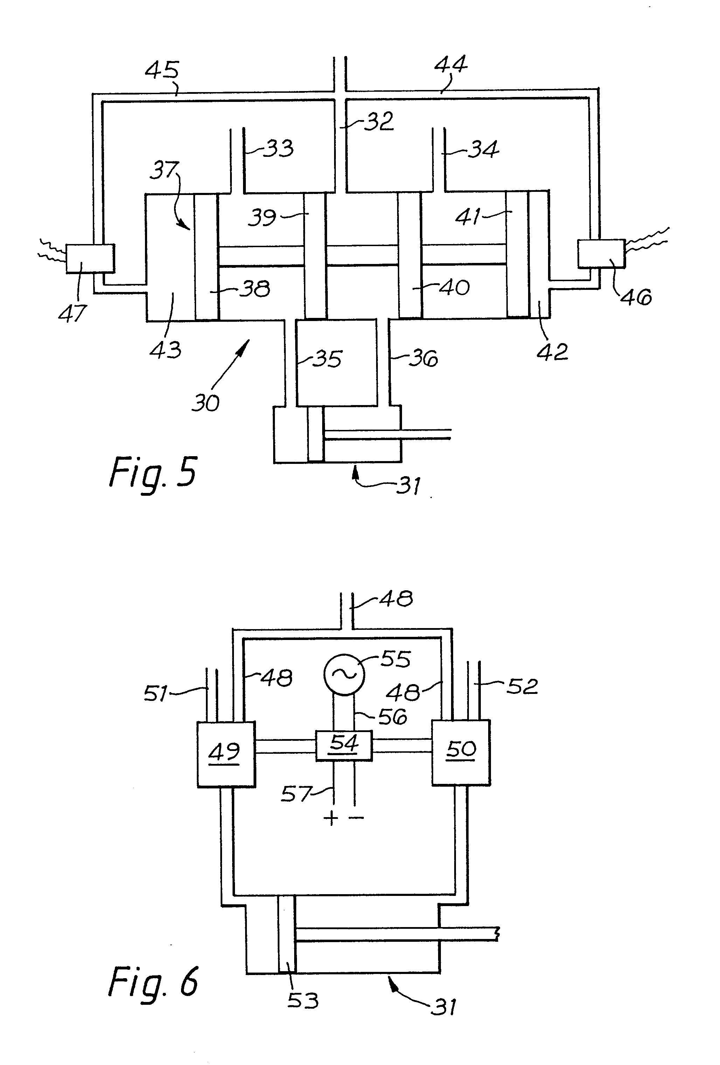

Referring to Figure 5, this shows a schematic five port spool valve 30 connected to a piston and cylinder assembly 31 and to a source of pneumatic power such as compressed air, 32. A pair of exhaust ports 33, 34 are disposed on either side of the inlet for pressurised medium 32 and a pair of working ports 35, 36 are connected via suitable lines to the piston and cylinder assembly 31. A multi-land piston generally indicated by 37 is movable within the five port valve and, as shown, compressed air from inlet 32 is connected to line 36 and line 35 is connected to exhaust 33. The lands 38, 39 and 40, 41 separate the various inlet and exhaust ports in a manner well known per se. The piston assembly 37 is reciprocated by means of compressed air applied to chambers 42, 43. The compressed air for the chambers 42, 43 is bled from the main line 32 via lines 44, 45 and is controlled by suitable solenoids 46, 47. In effect the assembly acts as a volume amplifier in that by controlling small quantities of air bled into chambers 42 and 43, large quantities of compressed air can be fed into the piston and cylinder assembly 31.

A five port spool valve may be emulated by the circuitry of the invention as shown in Figure 6. In this case, the piston and cylinder assembly 31 is fed from a compressed air line 48 via two solenoids 49, 50. The solenoids also incorporate exhausts 51, 52. The solenoids 49, 50 are overpowered in the manner described with reference to Figures 1-3 so that the solenoids 49, 50 can control the compressed air 48 at pressures greater than would be possible if the solenoids 49, 50 were operated at their continuously rated level. It will be appreciated that solenoids 49, 50 could be normally closed, in which case pressurised air would always be maintained on the cylinder 31 in the absence of any signal; or the solenoids could be both normally open, or one could be normally open and one could be normally closed. In the case of a normally open pair, the piston 53 would not be moved in the absence of any signal. In the case of normally closed, the.pressure to the left of the piston acting on a greater cross-sectional area would tend to move the piston to the right, and in the case of solenoid 50 being normally closed and solenoid 49 being normally open, the piston would be moved rapidly to the left. If solenoid 49 were to be normally closed and solenoid 50 were to be normally open, the piston would be moved rapidly to the right.

The solenoids 49, 50 are controlled by a circuitry in 54 in which power is supplied from a power source 55 via lines 56 and signal is supplied to the control circuitry via signal lines 57.

It is believed that the present invention provides for the first time a valve which is incapable of being opened by a solenoid operated at its normal continuous electrical rating and is therefore distinguishable from a system in which a normal solenoid is overpowered to make it work faster or in which the power is reduced after the valve has opened. In prior art systems, valves have always been designed so that they are capable of being opened by solenoids operating at their continuous power rating.

The advantages of the present invention are in part that the solenoid may be physically smaller and hence more solenoids may be packed together, the smaller size leads to a faster response and small sized solenoids may be used to control higher operating pneumatic pressures. With prior art systems which utilised arrangements in which the solenoid holding current could move the valve against the bias of the spring, there was clearly a maximum spring bias which could be used. This maximum spring bias in turn dictated the maximum force which could be exerted against the pneumatic pressure when the valve was in the closed position. This either meant that the cross-sectional area of the valve had to be small if the operating pressures were high - leading to sluggish operation of any unit controlled by the pneumatic valve - or alternatively if higher cross-sectional areas were required the maximum operating pressure the valve could withstand would be lowered.

It will be appreciated that when the valve is in the closed position - for a normal closed valve -the force exerted by the spring tending to close the valve must be sufficiently high to permit the valve to be forced against the pneumatic pressure acting on the underside area of the valve. However, the valve must be capable of being opened against less pressures and in the present invention the valve can be opened against the total spring bias only by over powering the valve and operating it at a power rating greater than that which would be permissible at a continuous rate.

**Claims**

1. A solenoid operated pneumatic valve to control the flow of compressed gas, the valve having a closure member movable between a closed position and an open position, the closure member being movable from one of the closed or open positions against the force of a resilient bias to the other position by an electric solenoid, characterised in that the closure member (13) being holdable in the energised position by an applied electrical power $P_H$, the value of $P_H$ being less than that which is capable of moving said closure member (13) against the force of the resilient bias (14) from said one position to the other and being equal to or less than the continuous electrical rating of said solenoid (5), and the level of applied electrical power needed to cause movement of said closure member (13) from said one position to the other against the force of the resilient bias being $P_M$, where $P_M$ is greater than the maximum continuous electrical rating of said solenoid (5).

2. A valve as claimed in Claim 1 further characterised in that the closure member may be movable between a de-energised position in which it is partially within the solenoid to an energised position in which it is nearer the centre of the solenoid.

3. A valve as claimed in Claim 1 or 2 further characterised in that the resilient bias is exerted by a conical spring having a substantially constant spring rate.

4. A valve as claimed in any one of Claims 1 to 3 further characterised in that the resilient bias holds the closure member of the valve in its normally closed position.

5. A solenoid operated pneumatic valve system including a valve as claimed in any one of Claims 1 to 4 further characterised in that there is provided a source of electrical power and means to regulate the electric power such that it is desired to move the closure member from one position to the other position against the force of the resilient bias, the electrical power of $P_M$ is applied by regulating means in the system and after the valve has reached the other position the regulating means reduces the level of electrical power applied to $P_H$.

6. A system as claimed in Claim 5 in which the regulating means comprises an electronic circuit having power storage means to store electrical energy to permit an output of $P_M$ without the need for power amplifiers.

7. A system as claimed in Claim 6 in which the power storage means comprises a capacitance or inductance circuit or a combination thereof.

8. A system as claimed in any one of Claims 5 to 7 in which $P_M$ and $P_H$ are applied at substantially constant voltage, the power level being substantially determined by alteration in the current flow.

9. A solenoid operated pneumatic valve to control the flow of a compressed gas up to maximum pressure $P_{TOP}$ and having a closure member movable between a closed position and an open position, characterised in that in the closed position the closure member closing an orifice of area A, such that a maximum force $P_{TOP}.A$ can act on the closure member, the closure member being resiliently biased into one of the closed or open positions by a resilient bias and being movable to the other of the closed or open positions by a solenoid acting against the resilient bias, the force exertable by the resilient bias being slightly greater than $P_{TOP}.A$ and the solenoid having a continuous rating such that at its continuous rating the maximum force exertable by the solenoid is less than $P_{TOP}.A$, the solenoid being capable of being intermittently overpowered to exert a force sufficient to move the closure member against the resilient bias without being damaged.

10. A valve as claimed in Claim 9 in which the cross-sectional area of the valve open to inlet pressure is 2 mm$^2$.

11. A system incorporating a plurality of valves as claimed in any one of Claims 1 to 4 or Claims 9 to 10.

Fig.1

*Fig. 2*

*Fig. 3*

*Fig. 4*

Fig. 5

Fig. 6